# EUROPEAN PATENT APPLICATION

(11) **EP 1 004 635 A2**
(43) Date of publication of application: **31.05.2000**
(21) Application number: 99500220.1
(22) Date of filing: 25.11.1999
(51) Int. Cl.: C09D 1/00, C09D 7/00

(54) **Formulation and method for the restoration and/or recovery of non wooden surfaces**

(30) Priority: 27.11.1998 ES 9802490
(71) Applicant: Garcia Asensio, Julian, 28400 Collado Villalba (ES)
(72) Inventor: Higa Maeshiro, Manuel, San Miguel, Lima (PE)
(74) Representative: Gonzalez Palmero, Fé

(57) **Abstract**

The formulation comprises oxalic acid (15-30%), calcium carbonate (5-20%), powdered aluminium (0.0005-5%) and water (balance) and can be obtained by mixing and dissolving the adequate amounts of said components in water. This formulation is adequate to restore and/or recover non wooden surfaces, for instance, floorings of cement, marble, vinyl derivatives, synthetic materials, terrazzo and the like.

## Description

### FIELD OF THE INVENTION

The invention is related, in general, to the restoration and/or recovery of non wooden surfaces by using a formulation comprising an aqueous solution or dispersion of oxalic acid, calcium carbonate and powdered aluminium.

### BACKGROUND OF THE INVENTION

Floorings and facings, due to ageing and use, progressively deteriorate, showing scratches, lines, pores, stains, etc., on their surfaces.

The products usually applied in the restoration and/or recovery of non wooden surfaces are, in general, toxic products and harmful for the environment due to the fact that they include fluorinated compounds, for instance, fluosilicates, that affect the ozone layer. Furthermore, said products are applied with the aid of steel wool, which causes inconveniences to the worker as well as lesion, such as, cuts on the skin and cornea, and lung and respiratory tract disorders. Furthermore, the application of said usual products is slower, requires more man power, and its useful life time is relatively short, lasting for approximately one week in high transit places.

There exists therefore the need to look for new adequate formulations for the restoration and/or recovery of non wooden surfaces to overcome the above mentioned inconveniences.

The present invention provides a solution to the existing need that comprises the development of a formulation capable of restoring and/or recovering surfaces, in particular floorings, which are not wooden.

### DETAILED DESCRIPTION OF THE INVENTION

The invention provides a restoring and/or recovering formulation for non wooden surfaces, hereinafter formulation of the invention, comprising:

| **Component** | **% in weight vs. total weight** |
|---|---|
| oxalic acid | 15-30 |
| calcium carbonate | 5-20 |
| powdered aluminium | 0.0005-5 |
| water | Balance |

Oxalic acid is usually applied as a reactant in chemical analysis as well as in clothing cleansing and finishing and in the bleaching of leather.

Calcium carbonate is primarily used in construction, for instance, in the manufacture of cements and unslaked lime, and in the pharmaceutical industry.

Powdered aluminium has several applications, among them, the manufacture of light materials paints and sensitisers in explosive formulations.

Nothing in the state of the art suggest the development of the formulation of the invention, neither the concentration of its different components, nor the fact that it comprises as fundamental constituents chemical compounds that had not previously been described as agents which could be used in the restoration and/or recovery of non wooden surfaces.

The formulation of the invention usually comes in the form of an aqueous solution or dispersion of its constituents although it could also come as a solid, for instance, in the form of a mixture of the solid components, to be reconstituted with water before use.

The formulation of the invention is adequate for the restoration and/or recovery of all types of non wooden surfaces, for instance, floorings and facings with base of calcareous products, cement, vinyl compounds, marble, slate, terrazzo, synthetic materials, etc. Although the desire is not to be bound by any theory, it seems that the formulation of the invention acts by filling in the damages (for instance, pores, abrasions, lines, scratches, etc.) existing on the surfaces to be treated and restoring and/or recovering in this way the surface being treated.

As used in this description, the expression "non wooden surfaces" refers to surfaces that are not made up, neither totally nor partially, of wood, and includes wood based surfaces, parquet, wooden platform flooring, etc.

The expression "surface restoration" refers to the repair of the damages suffered by said surface, whilst the expression "surface recovery" refers to the restoration of the original characteristics of the deteriorated surfaces. In a certain way, restoration of a surface may lead to its recovery.

The formulation of the invention shows numerous advantages versus the existing similar formulations, among which are:
- it is a product that respects the environment as well as the health and hygiene of the worker because it does not contain fluosilicates and does not require the use of steel wool for its application;
- it resists the formulations usually applied to clean surfaces without unpleasant stains showing on them;
- it is compatible with almost all the existing scents, and thus perfume can be added to its formula in order to aromatise the surfaces and premises whereto it is applied; and
- it provides a shiny but non-slippery finish.

Furthermore, the formulation of the invention has the advantage that the application stages and operations of the same are simplified as is its application time since other conventional products used in restoration and/or recovery of non wooden surfaces require the application of a first treatment with a stripper, wait for it to dry and, next, apply the treatment on the surface to be treated.

The formulation of the invention can replace restoration and/or recovery products for non wooden surfaces which include fluosilicates, whose application, in principle, shall be authorised until the year 2,000, because they are harmful for the environment. Furthermore, it may replace metallic waxes or acrylic derivatives used in the treatment of vinyl derivatives based surfaces.

The formulation of the invention may be easily obtained by mixing the components, adding water and shaking to obtain a total or partial dilution of the components. Although the procedure can be done in room temperature water, for instance, between 15°C and 30°C, in practise it is convenient to use hot water, for instance, at a temperature between 30°C and 90°C.

The formulation of the invention may be applied on the surface to be treated either by pouring or else with the aid of a conventional applicator, for instance, a sprayer, and afterwards, with the aid of conventional cleaning means, for instance, a piece of cloth or a mop, in its simplest manner, or else a non woven fibre disk, specially designed for the treatment of floorings, for instance those marketed by Scotch Brite - 3M, intended to be used in rotary cleaning machines, both of the walking driver type and of the seating driver type. The action of rubbing the formulation of the invention onto the surface with the aid of the cleaning means, seems to contribute to the precipitation or crystallisation of the solids present in the solution or suspension in the formulation of the invention which fill in the pores, scratches, an the rest of the existing damages on the surface to be treated, producing at the same time a non slippery shiny effect, hardening and protecting the treated surface with the formulation of the invention.

The amount of formulation of the invention to be used to restore and/or recover a surface depends on numerous factors, among them, the concentration of the formulation of the invention, the initial condition of the surface to be treated (since a cement surface is more porous than a marble one or a vinyl derivative one), etc. However, in general, adequate results may be obtained by applying an amount of the formulation of the invention ranging from 0.001 to 1 litre of formulation of the invention per square meter (m²) of surface to be treated.

The numerous tests carried out on the formulation of the invention have shown, surprisingly, the complementary and synergetic action of the different chemical substances used in the formulation of the invention on the surface to be treated, furthermore so, taking into account that the formulation of the invention contains substances that had not been previously described in similar applications for the treatment of surfaces.

The invention also provides a method to restore and/or recover a deteriorated surface, which surface is not total or partially made up of wood, which entails the application on the surface to be treated of an adequate amount of the formulation of the invention.

The following examples are good to illustrate the invention and shall not be considered as limiting of the scope of the same.

### EXAMPLE 1

### Preparation of restoring and/or recovering formulations for non wooden surfaces

One thousand grams (g) of the different formulas shown in Table 1 were prepared by mixing the compounds, in the amounts pointed out (g), shown in said Table 1.

**Table 1**

| **Restoring/Recovering Formulations** | | | | | |
|---|---|---|---|---|---|
| Component | [A] | [B] | [C] | [D] | [E] |
| Oxalic acid | 150 | 200 | 250 | 275 | 300 |
| Calcium Carbonate | 50 | 75 | 125 | 150 | 200 |
| Powdered Aluminium | 15 | 20 | 25 | 15 | 0.05 |
| Water | Rest | Rest | Rest | Rest | Rest |

The different components were gradually added to the water, heated at a temperature of 45-50°C approximately, and shaking after adding each component until it was dissolved.

The formulations [A] - [E] thus obtained are adequate to restore and/or recover non wooden surfaces, for instance, marble, cement or terrazzo based floorings.

### EXAMPLE 2

### Study of the efficiency of the restoring and/or recovering formulations for non wooden surfaces

The efficacy of the formulations [A] - [E] described in example 1 was tested on different surfaces [marble, cement or terrazzo floorings] according to the protocol shown in Table 2.

**Table 2**

| **Efficacy Test** | | |
|---|---|---|
| Formulation | Amount (1) | Surface |
| [A] | 0.5 | Marble |
| [B] | 1.5 | Marble |
| [C] | 0.75 | Cement |
| [D] | 3.5 | Cement |
| [E] | 1.5 | Terrazzo |

Each surface to be treated had an area of about 10 m² approximately.

In every case, the application of the formulations was done with the aid of a conventional applicator [Glass cleansing spray - borrego]. Next, with the aid of a rotary cleaning machine of 200 revolutions per minute (rpm) of the walking driver type, using a non woven fibre disk, specially designed for the treatment of floors [Scotch Brite - 3M]. As a result of the turning of the fibres and the power:weight ratio, the precipitation of the solids present in the formulations . used takes place, which fill in the damages existing on the surfaces treated, and at the same time produces a non slippery shiny effect, and the treated surfaces are hardened and protected.

In every case satisfactory results were obtained noting the restoration and/or recovery of the damaged surfaces undergoing treatment.

## Claims

1. Restoring and/or recovering formulation for non wooden surfaces characterised in that it comprises:
| **Component** | **% in weight vs. total weight** |
|---|---|
| oxalic acid | 15-30 |
| calcium carbonate | 5-20 |
| powdered aluminium | 0.0005-5 |
| water | Balance |

2. Formulation according to claim 1, which comprises, furthermore, a scent.

3. Method to restore and/or recover a damaged, non wooden surface, which comprises the application on said surface to be treated of an adequate amount of a formulation according to either of the claims 1 or 2.
